# EUROPÄISCHE PATENTANMELDUNG

(11) **EP 2 131 211 A2**
(43) Veröffentlichungstag der Anmeldung: **09.12.2009**
(21) Anmeldenummer: 09161946.0
(22) Anmeldetag: 04.06.2009
(51) Int. Cl.: G01S 15/04, G01S 7/52, G01S 15/88

(54) **Verfahren zur Funktionsprüfung von Näherungssensoren im laufenden Betrieb sowie Näherungssensor mit Referenzelement**

(30) Priorität: 04.06.2008 DE 102008009607
(71) Anmelder: Ponte Vecchio Consult Sagl, 6600 Muralto (CH)
(72) Erfinder: Schübler, Hans-Hubert, 45479 Mülheim (DE)
(74) Vertreter: Cohausz & Florack

(57) **Zusammenfassung**

Der vorliegenden Erfindung liegt das technische Problem zu Grunde, Verfahren zur Funktionsprüfung von Näherungssensoren im laufenden Betrieb anzugeben, mit dem ein Näherungssensor weitgehend manipulationssicher betrieben werden kann. Das technische Problem wird durch ein Verfahren gelöst, bei dem Ultraschallwellen von einem an einem Ultraschallsensorkopf angeordneten Schallwandler in einen Erfassungsbereich ausgesendet werden, bei dem aus dem Erfassungsbereich auf den Schallwandler einfallende Ultraschallwellen empfangen werden, bei dem durch den Ultraschallsensorkopf Empfangssignale erzeugt werden, bei dem jedes Empfangssignal mit einem von mindestens zwei unterschiedlichen Verstärkungsgraden verstärkt wird, bei dem die mit dem niedrigeren Verstärkungsgrad verstärkten Empfangssignale nach dem Prinzip der Echolaufzeitmessung analysiert werden und bei dem ein an das Ergebnis der Analyse angepasstes erstes Steuersignal erzeugt wird, bei dem die mit dem höheren Verstärkungsgrad verstärkten Empfangssignale nach dem Prinzip der Echolaufzeitmessung analysiert und zusätzlich mit einem Referenzempfangssignal abgeglichen werden und bei dem ein an das Ergebnis des Abgleichs angepasstes zweites Steuersignal erzeugt wird, und bei dem ein Ausgangssignal erzeugt wird, das je nach verwendetem Verstärkungsgrad an das erste Steuersignal oder an das zweite Steuersignal angepasst ist.

Darüber hinaus betrifft die Erfindung einen Näherungssensor zur Überwachung des Umgebungsbereichs einer Vorrichtung sowie ein weiteres Verfahren zur Funktionsprüfung von Näherungssensoren im laufenden Betrieb.

## Beschreibung

Die Erfindung betrifft Verfahren zur Funktionsprüfung von Näherungssensoren im laufenden Betrieb und einen Näherungssensor zur Überwachung des Umgebungsbereichs einer Vorrichtung.

Näherungssensoren werden beispielsweise zur Sicherung von Kraftfahrzeugen verwendet. Vorzugsweise ist der Näherungssensor mit der Steuerungseinrichtung des Kraftfahrzeugs verbunden. Bei Näherungssensoren dieser Art werden Ultraschallwellen in Pulsen beispielsweise in den zu überwachenden Rückraum des Kraftfahrzeugs ausgesendet. Befindet sich in dem Rückraum ein Hindernis, beispielsweise eine Person oder ein Gegenstand, empfängt der Näherungssensor ein Echo der von ihm ausgesendeten Ultraschallwellen. Tritt ein Echo auf, wird über die Verbindung ein Signal an die Steuerungseinrichtung übermittelt. Dieses Signal veranlasst dann die Steuerungseinrichtung, beispielsweise eine Rückwärtsbewegung zu beenden bzw. zu verhindern, um das das Echo erzeugende Hindernis zu schützen.

Die endliche Aussendezeit der Ultraschallwellenpulse und die endliche Ausbreitungsgeschwindigkeit der Ultraschallwellen verursachen einen sogenannten Todraum vor dem Sender/Empfänger der Ultraschallwellen. Dies bedeutet, dass Echos, die von sich in dem Todraum befindlichen Hindernissen erzeugt werden, von dem Näherungssensor nicht wahrgenommen werden können, da die Laufzeit zwischen Aussendung und Empfang zu kurz ist.

Dieser Todraum macht Ultraschall-Näherungssensoren anfällig gegenüber Manipulationen. Beispielsweise können absichtlich Hindernisse in den Todraum gebracht werden, um die Aussendung und den Empfang von Ultraschallwellen durch den Näherungssensor zu unterdrücken. Als Hindernis kann beispielsweise Klebeband verwendet werden, mit dem der Näherungssensor abgeklebt wird.

Aus dem Stand der Technik sind Näherungssensoren bekannt, deren Todraum durch apparative Ausgestaltungen manipulationssicher gemacht wird. Es ist beispielsweise bekannt, den Todraum mit einem Gitterkäfig zu umgeben. Vorzugsweise ist der Gitterkäfig fest an dem Näherungssensor angebracht. Das Gitter ist so ausgebildet, dass es für die Ultraschallwellen weitgehend kein Hindernis darstellt. Auch müssen die von dem Gitter erzeugten Echos so schwach sein, dass sie von dem Näherungssensor nicht wahrgenommen werden.

Nachteilig an Näherungssensoren der vorstehend genannten Art ist, dass sie einen umfangreichen Montageraum einnehmen. Weiterhin ist bei diesen Näherungssensoren eine mechanische Manipulation zwar erschwert, aber nicht unmöglich gemacht. Im Fall des Gitterkäfigs beispielsweise ist es möglich, den Todraum mit einem Material zu füllen, dessen Dimension so verkleinert werden kann, dass es durch die Maschen des Gitters passt, das aber gleichzeitig eine große abdeckende Fläche ausbilden kann. Als Beispiele seien hier Stofftücher oder Papierbögen genannt. Ferner sind apparative Ausgestaltungen zum Manipulationsschutz des Todraums häufig anfällig gegen äußere Einwirkungen wie Regen, Feuchtigkeit oder andere Witterungseinflüsse.

Der vorliegenden Erfindung liegt somit das technische Problem zu Grunde, Verfahren zur Funktionsprüfung von Näherungssensoren im laufenden Betrieb anzugeben, mit dem ein Näherungssensor weitgehend manipulationssicher betrieben werden kann. Weiterhin liegt der vorliegenden Erfindung das technische Problem zu Grunde, einen Näherungssensor anzugeben, mit dem eines der erfindungsgemäßen Verfahren besonders vorteilhaft ausführbar ist.

Das technische Problem wird gemäß einer ersten Lehre durch ein Verfahren zur Funktionsprüfung von Näherungssensoren im laufenden Betrieb gelöst, bei dem Ultraschallwellen von einem an einem Ultraschallsensorkopf angeordneten Schallwandler in einen Erfassungsbereich ausgesendet werden, bei dem aus dem Erfassungsbereich auf den Schallwandler einfallende Ultraschallwellen empfangen werden, bei dem durch den Ultraschallsensorkopf Empfangssignale erzeugt werden, bei dem jedes Empfangssignal mit einem von mindestens zwei unterschiedlichen Verstärkungsgraden verstärkt wird, bei dem die mit dem niedrigeren Verstärkungsgrad verstärkten Empfangssignale nach dem Prinzip der Echolaufzeitmessung analysiert werden und bei dem ein an das Ergebnis der Analyse angepasstes erstes Steuersignal erzeugt wird, bei dem die mit dem höheren Verstärkungsgrad verstärkten Empfangssignale nach dem Prinzip der Echolaufzeitmessung analysiert und zusätzlich mit einem Referenzempfangssignal abgeglichen werden und bei dem ein an das Ergebnis des Abgleichs angepasstes zweites Steuersignal erzeugt wird, und bei dem ein Ausgangssignal erzeugt wird, das je nach verwendetem Verstärkungsgrad an das erste Steuersignal oder an das zweite Steuersignal angepasst ist.

Die Erfindung hat erkannt, dass sich eine weitgehende Manipulationssicherheit eines Näherungssensors vorteilhaft durch Mittel der elektronischen Signalverarbeitung erreichen lässt. Durch diese Art des Manipulationsschutzes wird eine große, raumeinnehmende apparative Ausgestaltung des Näherungssensors vermieden. Weiterhin ist es erfahrungsgemäß für eine Person, die nicht über Kenntnisse des Aufbaus und des Betriebs eines Näherungssensors verfügt, eine Manipulation des Näherungssensors mit mechanischen Maßnahmen naheliegender als eine Manipulation mit Eingriffen in die Elektronik des Näherungssensors, da letztere ein fundiertes Wissen der Elektronik voraussetzt. Somit wird die Schwelle, ab der eine Person eine Manipulation für aussichtsreich und einfach umsetzbar hält, deutlich erhöht.

Der Begriff Vorrichtung ist im Rahmen der vorliegenden Erfindung sehr weit zu verstehen. Grundsätzlich kann als Vorrichtung jeder Gegenstand verwendet werden, der geeignet ist, einen Näherungssensor in seinen Aufbau aufzunehmen. Als Vorrichtung können beispielsweise Kraftfahrzeuge, insbesondere Müllsammelfahrzeuge, verwendet werden. Unter Kraftfahrzeugen werden im Folgenden sowohl Kraftfahrzeuge im herkömmlichen Sinne verstanden, die von einer Person gefahren werden, als auch selbsttätig fahrende Arbeitsmaschinen, die entweder vollständig automatisch fahren, beispielsweise computergesteuert, oder durch eine Person gelenkt werden, beispielsweise mittels einer Fernbedienung. Über Näherungssensoren an Kraftfahrzeugen hinaus kann das Verfahren aber auch mit Näherungssensoren für andere Zwecke, beispielsweise für die Anwendung in Fahrstühlen, an Hebebühnen oder Laufbändern, ausgeführt werden.

Die Ultraschallwellen werden in einen Erfassungsbereich ausgesendet. Der Erfassungsbereich ist vorzugsweise von einer kegelartigen Geometrie begrenzt, deren verjüngtes Ende seinen Ursprung am Schallwandler hat. Die Geometrie des Erfassungsbereiches hängt jedoch im Wesentlichen von der Ausgestaltung des Ultraschallsensorkopfes und/oder der Anordnung des Schallwandlers ab, so dass der Erfassungsbereich somit eine andere Form aufweisen kann. In dem Erfassungsbereich können die Ultraschallwellen auf Hindernisse, beispielsweise eine sich in dem Erfassungsbereich aufhaltende Person, treffen. Durch die Hindernisse werden die Ultraschallwellen unter anderem, zumindest zum Teil, in Richtung des aussendenden Schallwandlers reflektiert, so dass der Schallwandler Echos der von ihm ausgesendeten Ultraschallwellen empfangen kann.

Die Informationen über die von dem Schallwandler empfangenen Ultraschallwellen, insbesondere der Ultraschallwellenechos, werden von dem Ultraschallsensorkopf in die elektronische Form eines Empfangssignals gebracht. Das Empfangssignal weist insbesondere Informationen über die Amplitude der Ultraschallwellen, das Frequenzspektrum der Ultraschallwellen, den zeitlichen Verlauf der Ultraschallwellen oder eine beliebige Kombination davon auf. Es versteht sich von selbst, dass bei Fehlen jeglicher empfangener Ultraschallwellen, beispielsweise weil sich kein Hindernis im Erfassungsbereich befindet, das Empfangssignal lediglich ein Nullsignal aufweist. Dieses Nullsignal umfasst beispielsweise Hintergrundrauschen, insbesondere elektronisches Hintergrundrauschen.

Jedes Empfangssignal wird mit einem von mindestens zwei unterschiedlichen Verstärkungsgraden verstärkt. Welcher Verstärkungsgrad auf ein bestimmtes Empfangssignal angewendet wird, kann dabei von der laufenden Zählung der Empfangssignale während des Betriebs des Näherungssensors abhängen. Es ist jedoch auch möglich, die Empfangssignale innerhalb bestimmter Zeitintervalle mit den unterschiedlichen Verstärkungsgraden periodisch abwechselnd zu verstärken.

Die mit dem niedrigeren Verstärkungsgrad verstärkten Empfangssignale werden verwendet, um Hindernisse in dem Erfassungsbereich des Näherungssensors zu erkennen. Der niedrigere Verstärkungsgrad ist so ausgebildet, dass an Hindernissen im Erfassungsbereich erzeugte Ultraschallwellenechos durch die Analyse der mit dem niedrigeren Verstärkungsgrad verstärkten Empfangssignale nachgewiesen werden können. Dazu werden diese Empfangssignale nach dem Prinzip der Echolaufzeitmessung analysiert. Daraufhin wird ein an das Ergebnis der Analyse angepasstes erstes Steuersignal erzeugt.

Das erste Steuersignal kann im einfachsten Fall zwei Zustände "Null" und "Eins" annehmen. Geht aus der Analyse eines mit dem niedrigeren Verstärkungsgrad verstärkten Empfangssignals hervor, dass sich ein Hindernis in dem Erfassungsbereich befindet, wird das erste Steuersignal auf einen Wert, beispielsweise "Eins", gesetzt. Geht aus der Analyse aber hervor, dass sich kein Hindernis in dem Erfassungsbereich befindet, nimmt das erste Steuersignal den zweiten möglichen Wert, in diesem Beispiel "Null", an. Die beiden Werte des hier beispielhaft aufgeführten ersten Steuersignals "Eins" und "Null" können beispielsweise in Form einer Spannungsänderung an einem Signalausgang für das erste Steuersignal realisiert werden. Der Wert "Eins" könnte durch eine Spannung von etwa 5 V realisiert werden, während der Wert "Null" durch eine Spannung von ca. 0 V umsetzbar wäre.

Es ist allerdings auch möglich, dem ersten Steuersignal eine andere Form zu geben. So könnten beispielsweise mehr als zwei Zustände vorgesehen sein, die eine differenziertere Anpassung des ersten Steuersignals an das Ergebnis der Analyse des mit dem niedrigeren Verstärkungsgrad verstärkten Empfangssignals ermöglichen.

Die mit dem höheren Verstärkungsgrad verstärkten Empfangssignale werden verwendet, um die Manipulationssicherheit des Näherungssensors herzustellen. Auch hier werden die Empfangssignale nach dem Prinzip der Echolaufzeitmessung analysiert. Zusätzlich aber werden die mit dem höheren Verstärkungsgrad verstärkten Empfangssignale mit einem Referenzempfangssignal abgeglichen, das mit dem im Wesentlichen gleichen höheren Verstärkungsgrad aufgezeichnet wurde. Der Abgleich der beiden Empfangssignale berücksichtigt insbesondere die Amplitude der Ultraschallwellen, das Frequenzspektrum der Ultraschallwellen, den Zeitverlauf der Ultraschallwellen oder eine beliebige Kombination davon. Schließlich wird ein an das Ergebnis des Abgleichs angepasstes zweites Steuersignal erzeugt.

Auch das zweite Steuersignal kann im einfachsten Fall zwei Zustände annehmen. Geht aus dem Abgleich eines mit dem höheren Verstärkungsgrad verstärkten Empfangssignals hervor, dass das Empfangssignal und das Referenzempfangssignal nicht innerhalb bestimmter Toleranzgrenzen übereinstimmen, wird das zweite Steuersignal auf einen Wert, beispielsweise "Eins", gesetzt. Stimmen aber das Empfangssignal und das Referenzempfangssignal innerhalb der bestimmten Toleranzgrenzen überein, nimmt das zweite Steuersignal den zweiten möglichen Wert, in diesem Beispiel "Null", an. Auch hier ist eine Realisierung der zwei Zustände durch eine Spannungsänderung an einem Signalausgang für das zweite Steuersignal möglich. Weiterhin ist es möglich, auch für das zweite Steuersignal mehr als zwei Zustände vorzusehen, um das Ergebnis des Abgleichs differenzierter abzubilden.

Das Referenzempfangssignal weist bevorzugt Ultraschallwellenechos auf, die durch die körperliche Ausgestaltung des Erfassungsbereichs verursacht werden. Diese Echos sind aber gleichzeitig so schwach, dass sie durch geeignete Wahl des Verstärkungsgrads bei der Analyse der Empfangssignale unterdrückbar sind. Werden bei dem Abgleich eines mit dem höheren Verstärkungsgrad verstärkten Empfangssignals mit dem Referenzempfangssignal nicht mindestens die Charakteristiken des Referenzempfangssignals nachgewiesen, deutet dies auf eine Beeinträchtigung der Funktionstüchtigkeit des Näherungssensors hin, die von einer Manipulation des Näherungssensors herrühren kann. Auf diese Weise lässt sich eine Manipulation innerhalb des Todraums des Näherungssensors vermeiden, indem zwar schwache, aber nachweisbare, allgegenwärtige, außerhalb des Todraums erzeugte Ultraschallwellenechos als Referenz herangezogen werden.

Das Referenzempfangssignal wird vorzugsweise vor der Inbetriebnahme des Näherungssensors aufgezeichnet, wenn der Näherungssensor bereits an der Vorrichtung montiert ist. Bei der Aufzeichnung dürfen sich selbstverständlich keine Hindernisse, also Personen oder externe Gegenstände, in dem Erfassungsbereich befinden. Der Verstärkungsgrad für die Aufzeichnung des Referenzempfangssignals wird so gewählt, dass ein Referenzempfangssignal mit charakteristischen Ultraschallwellenechos ausgebildet wird. Anschließend wird der Verstärkungsgrad so weit reduziert, dass die in dem Referenzempfangssignal aufgezeichneten Ultraschallwellenechos nicht mehr nachweisbar sind. Der so ermittelte niedrigere Verstärkungsgrad wird somit für die Überwachung des Erfassungsbereichs auf Hindernisse verwendet. Die Aufzeichnung des Referenzempfangssignals kann natürlich wiederholt werden, um gegebenenfalls Änderungen an der körperlichen Ausgestaltung der Vorrichtung, und damit auch an dem Erfassungsbereich, zu berücksichtigen.

Zum Abschluss des Verfahrens wird ein Ausgangssignal erzeugt, das je nach verwendetem Verstärkungsgrad entweder an das erste Steuersignal oder an das zweite Steuersignal angepasst ist. Vorzugsweise ist das Ausgangssignal so differenziert, dass nachvollziehbar ist, ob das Ergebnis der Analyse eines mit dem niedrigeren Verstärkungsgrad verstärkten Empfangssignals oder das Ergebnis des Abgleichs eines mit dem höheren Verstärkungsgrad verstärkten Empfangssignals mit dem Referenzempfangssignal angezeigt wird. Es ist aber auch möglich, die Ergebnisse der Analyse und des Abgleichs so zusammenzufassen, dass ein nachgewiesenes Hindernis und eine nachgewiesene Manipulation den gleichen einen Zustand des Ausgangssignals und dementsprechend fehlende Hindernisse und eine fehlende Manipulation den gleichen anderen Zustand des Ausgangssignals bewirken. Ferner kann auch das Ausgangssignal durch eine Spannungsänderung bewirkt werden.

In einer bevorzugten Ausführung des Verfahrens weist das Referenzempfangssignal ein zumindest von Teilen der Vorrichtung im Erfassungsbereich erzeugtes Ultraschallwellenecho auf. Dies bedeutet, dass durch geeignete Anordnung des Näherungssensors an der Vorrichtung ein Referenzempfangssignal erzeugt werden kann. Zusätzliche Mittel zur Erzeugung geeigneter Ultraschallwellenechos für das Referenzempfangssignal können somit vermieden werden. Dies spart insbesondere zusätzlichen Montageraum ein.

Es ist jedoch auch möglich, dass das Referenzempfangssignal zusätzlich oder alternativ ein von einem in dem Erfassungsbereich angeordneten Referenzelement erzeugtes Ultraschallwellenecho aufweist. Diese Ausführung ist insbesondere dann bevorzugt, wenn die Vorrichtung, an der der Näherungssensor montiert ist, keine körperliche Ausgestaltung aufweist, die geeignete Ultraschallwellenechos für ein Referenzempfangssignal erzeugen kann. Doch auch wenn die körperliche Ausgestaltung der Vorrichtung für ein Referenzempfangssignal geeignet ist, ist es möglich, zusätzlich ein Referenzelement im Erfassungsbereich vorzusehen. Auf diese Weise kann dem Referenzempfangssignal eine verbesserte Unterscheidbarkeit verliehen werden.

In einer weiteren bevorzugten Ausführungsform wird der Betrieb der Vorrichtung von dem Ausgangssignal beeinflusst. Der Betrieb der Vorrichtung kann dabei insbesondere eingeschränkt oder sogar vollständig unterbunden werden, wenn der Näherungssensor ein Hindernis im Erfassungsbereich oder eine Manipulation des Näherungssensors nachweist. Somit wird verhindert, dass sich im Erfassungsbereich befindliche Hindernisse, seien es Personen oder Gegenstände, durch den Betrieb der Vorrichtung Schaden nehmen. Wird beispielsweise der Rückraum eines Fahrzeugs überwacht, kann durch das Ausgangssignal ein Motorstopp oder auch eine Geschwindigkeitsbegrenzung für eine auf den Erfassungsbereich gerichtete Bewegung bewirkt werden.

Ferner umfasst der Erfassungsbereich, in den die Ultraschallwellen ausgesendet werden, vorzugsweise einen Winkel von 60°. Durch die Wahl dieses Aussendewinkels wird eine zweckmäßige Abdeckung der Umgebung des Näherungssensors und damit auch der Vorrichtung, an der der Näherungssensor montiert ist, mit Ultraschallwellen erreicht.

In einer weiteren bevorzugten Ausführungsform wird jedes n-te Empfangssignal mit dem höheren Verstärkungsgrad verstärkt, wobei n einen beliebigen Wert der ganzen Zahlen größer oder gleich zwei annehmen kann. Damit wird gewährleistet, dass der Näherungssensor im Wesentlichen manipulationssicher ist und trotzdem Hindernisse, die sich im Erfassungsbereich befinden, erkennen kann. Der Wert von n kann insbesondere so gewählt werden, wie es für die Anwendung zweckdienlich ist. Höhere Werte von n sind insbesondere dann geeignet, wenn die Manipulationsgefahr als eher gering, aber die Gefahr von Hindernissen im Erfassungsbereich als eher hoch eingeschätzt wird.

Weiterhin ist durch die Steuersignale und/oder durch das Ausgangssignal vorzugsweise ein Alarm auslösbar. Durch den Alarm werden vorteilhafter Weise Menschen auf den Zustand der Steuersignale bzw. des Ausgangssignals aufmerksam gemacht. Der Alarm wird vorzugsweise dann ausgelöst, wenn ein Hindernis im Erfassungsbereich oder eine Manipulation des Näherungssensors nachgewiesen wurde. Ein Alarm kann in vielfältiger Weise ausgebildet sein. Es kann sich beispielsweise um ein akustisches, optisches oder auch ein von elektronischen Kommunikationsmitteln übertragenes Signal handeln.

Bevorzugter Weise wird ein gepulstes Ausgangssignal erzeugt. Dadurch wird eine Manipulation des Näherungssensors weiter erschwert. Wird beispielsweise das das Fehlen eines Hindernisses im Erfassungsraum bzw. das das Fehlen einer Manipulation anzeigende Ausgangssignal durch eine konstante Spannung (zum Beispiel in der Höhe einiger Volt) wiedergegeben, könnte die elektrische Schaltung des Näherungssensors und damit das Überwachungsverfahren durch eine Manipulation der Elektronik, beispielsweise das externe Anlegen einer entsprechenden Spannung, beeinflusst werden. Mittels des gepulsten Ausgangssignals wird ein derartiger Manipulationsversuch jedoch verkompliziert, da nicht nur die korrekte Spannungsamplitude des Ausgangssignals, sondern auch die korrekte Frequenz eingestellt werden muss. Mögliche Frequenzen eines gepulsten Ausgangssignals liegen in der Größenordnung von etwa 100 Hz.

Das technische Problem wird gemäß einer zweiten Lehre durch einen Näherungssensor zur Überwachung des Umgebungsbereichs einer Vorrichtung und zur Ausführung eines der vorstehend beschriebenen Verfahren gelöst, mit einem Ultraschallsensorkopf, mit einem an dem Ultraschallsensorkopf angeordneten Schallwandler und mit einer in dem Ultraschallsensorkopf angeordneten Verarbeitungseinheit, wobei die Verarbeitungseinheit einen Verstärker, Mittel zur Analyse von Empfangssignalen und Mittel zum Erzeugen von Steuersignalen und Ausgangssignalen aufweist, wobei Ultraschallwellen von dem Schallwandler in einen Erfassungsbereich aussendbar sind, wobei aus dem Erfassungsbereich einfallende Ultraschallwellen von dem Schallwandler empfangbar sind, und wobei durch den Verstärker mindestens zwei unterschiedliche Verstärkungsgrade einstellbar sind, wobei ein Referenzelement zumindest teilweise in dem Erfassungsbereich angeordnet ist, und wobei das Referenzelement so ausgebildet ist, dass die von dem Referenzelement reflektierten Ultraschallwellen nur bei dem höheren Verstärkungsgrad von den Mitteln zur Analyse der Empfangssignale wahrnehmbar sind.

In einer bevorzugten Ausgestaltung des Näherungssensors ist eine Verbindung zu einer Steuerungseinheit der Vorrichtung vorgesehen. Insbesondere wird über die Verbindung das Ausgangssignal des Näherungssensors an die Steuerungseinheit übermittelt. Durch die Verbindung zu der Steuerungseinheit wird gewährleistet, dass der Näherungssensor den Betrieb der Vorrichtung beeinflussen kann.

Weiterhin ist vorzugsweise eine Montageplatte zur Befestigung des Ultraschallsensorkopfes vorgesehen. Damit lässt sich eine leichte und kompatible Verwendung des Näherungssensors erreichen, ohne dass für verschiedene Anwendungen unterschiedliche Anbringungen herangezogen werden müssen.

In einer weiteren bevorzugten Ausgestaltung des Näherungssensors sind Mittel zum Auslösen eines Alarms vorgesehen.

Das technische Problem wird gemäß einer dritten Lehre durch ein Verfahren zur Funktionsprüfung von Näherungssensoren im laufenden Betrieb gelöst, bei dem zwei voneinander beabstandete Ultraschallsensorköpfe mittels eines Synchronisierungssignals synchronisiert werden, bei dem von dem ersten Ultraschallsensorkopf in fester zeitlicher Beziehung zu dem Synchronisierungssignal ein Ultraschallwellenpuls ausgesendet wird und bei dem von dem zweiten Ultraschallsensorkopf in Abhängigkeit von der zeitlichen Relation der Detektion des Ultraschallwellenpulses zum Synchronisierungssignal ein Steuersignal erzeugt wird.

Auf diese Weise kann ein mindestens zwei Ultraschallsensorköpfe aufweisender Näherungssensor manipulationssicher gemacht werden. Der erste und der zweite Ultraschallsensorkopf sind an einer Vorrichtung in einem bestimmten Abstand zueinander angeordnet. Die beiden Ultraschallsensorköpfe können über eine Synchronisierungsleitung, welche zur Übermittlung von Synchronisierungssignalen vorgesehen ist, miteinander verbunden sein. Alternativ ist es auch möglich, eine kabellose Übertragung der Synchronisierungssignale, beispielsweise per Funk oder Infrarot vorzusehen. Grundsätzlich ist es auch denkbar, einen externen Synchronisierungssignalgeber vorzusehen, welcher die Synchronisierungssignale an beide Ultraschallsensorköpfe übermittelt. Die Synchronisierungssignale überwinden die Abstände zu den Ultraschallsensorköpfen, beispielsweise zwischen dem ersten und zweiten Ultraschallsensorkopf im Wesentlichen instantan, also ohne merkliche zeitliche Verzögerung.

Durch die Übermittlung eines Synchronisierungssignals wird der zweite Ultraschallsensorkopf darauf eingestellt, dass in einer festen zeitlichen Beziehung zu dem Synchronisierungssignal ein von dem ersten Ultraschallsensorkopf ausgesendeter Ultraschallwellenpuls auf direktem Wege zu dem zweiten Ultraschallsensorkopf gelangen und von diesem detektiert werden müsste. Finden die Übermittlung des Synchronisierungssignals und die Aussendung des Ultraschallwellenpulses beispielsweise gleichzeitig statt, würde diese zeitliche Beziehung gerade in der kürzesten Laufzeit des Ultraschallwellenpulses von dem ersten zu dem zweiten Ultraschallsensorkopf bestehen, denn die Laufzeit des Synchronisierungssignals ist gegenüber der Laufzeit des Ultraschallwellenpulses im Wesentlichen vernachlässigbar. Die Differenz der Laufzeit des Ultraschallwellenpulses und der Laufzeit des Synchronisierungssignals entspricht in diesem Beispiel also im Wesentlichen der Laufzeit des Ultraschallwellenpulses.

Empfängt der zweite Ultraschallsensorkopf den direkten Ultraschallwellenpuls nicht zu der bestimmten Zeit, wobei Toleranzgrenzen gesetzt werden können, wird von einer Manipulation der Ultraschallsensorkopfanordnung ausgegangen. Eine Manipulation könnte beispielsweise dann vorliegen, wenn ein Objekt zwischen die Ultraschallsensorköpfe platziert wurde. Somit kann von dem zweiten Ultraschallsensorkopf ein Steuersignal erzeugt werden, welches die vermutete Manipulation repräsentiert und gegebenenfalls zu einem Eingriff in den Betrieb der Vorrichtung, an der die Ultraschallsensorköpfe montiert sind, führt. Wird der Ultraschallwellenpuls jedoch wie erwartet empfangen, wird ein daran entsprechend angepasstes Steuersignal erzeugt. Das Steuersignal kann im einfachsten Fall zwei Werte, "Eins" für Manipulation liegt vor und "Null" für Manipulation liegt nicht vor, annehmen. Zu weiteren Einzelheiten bezüglich der Steuersignale wird auf die weiter oben gemachten Ausführungen verwiesen.

Grundsätzlich ist es auch möglich, zusätzlich zu der zeitlichen Relation der Detektion des Ultraschallwellenpulses zum Synchronisierungssignal auch die Amplitude und/oder das Frequenzspektrum des Ultraschallwellenpulses für die Funktionsprüfung zu verwenden. In diesen Fällen kann es zweckmäßig sein, den auf direktem Wege von dem ersten zu dem zweiten Ultraschallsensorkopf fortgepflanzten Ultraschallwellenpuls unter manipulationsfreien und hindernisfreien Bedingungen in Form eines Referenzsignals aufzuzeichnen und später im laufenden Betrieb für einen Abgleich mit dem gemessenen Ultraschallwellenpuls zu verwenden und das Ergebnis dieses Abgleichs bei der Bildung des Steuersignals zu berücksichtigen.

Ultraschallwellensignale, welche von dem zweiten Ultraschallsensorkopf gemessen werden und der zeitlichen Relation zum Synchronisierungssignal nicht entsprechen, können ferner als Ultraschallwellenechos von sich in dem Erfassungsbereich befindlichen Hindernissen wie Personen oder Gegenständen angesehen werden. Der zweite Ultraschallsensorkopf erzeugt demnach auch weitere Steuersignale in Abhängigkeit der Präsenz von Hindernissen im Erfassungsbereich. Diese Steuersignale können dann mit den Steuersignalen, welche im Zuge der Funktionsprüfung erzeugt wurden, verarbeitet werden. Zu weiteren Einzelheiten hinsichtlich der Verarbeitung der verschiedenen Steuersignale und den daraus resultierenden Ausgangssignalen wird ebenfalls auf die zuvor gemachten Ausführungen verwiesen.

Auch diese Art des Manipulationsschutzes erlaubt eine wenig raumeinnehmende apparative Ausgestaltung des Näherungssensors. Vorkehrungen zur Abschirmung des Todraums beispielsweise sind nicht erforderlich.

In einer bevorzugten Ausführungsform des Verfahrens fungiert der erste Ultraschallsensorkopf lediglich als Sender der Ultraschallwellenpulse und der zweite Ultraschallsensorkopf lediglich als Empfänger der Ultraschallwellenpulse. Dies ist die einfachste Möglichkeit, das erfindungsgemäße Verfahren umzusetzen.

Es ist aber auch denkbar, dass der eine Ultraschallsensorkopf als Sender und Empfänger für den jeweils anderen Ultraschallsensorkopf fungiert. Auf diese Weise kann eine doppelte Absicherung der Vorrichtung erreicht werden.

Ferner kann der erste Ultraschallsensorkopf, welcher die Ultraschallwellenpulse aussendet, auch der Sender der Synchronisierungssignale sein. In diesem Fall wäre der zweite Ultraschallsensorkopf, welcher die Ultraschallwellenpulse zum Zweck der Funktionsprüfung empfängt, auch der Empfänger der Synchronisierungssignale. Alternativ kann aber auch der zweite Ultraschallsensorkopf der Sender der Synchronisierungssignale sein, was den ersten Ultraschallsensorkopf zum Empfänger der Synchronisierungssignale machte. In einer weiteren Alternative könnte auch ein externer Synchronisierungssignalgeber vorgesehen sein, welcher Synchronisierungssignale an beide Ultraschallsensorköpfe übermittelt.

Vorzugsweise wird durch die Dauer des Synchronisierungssignals ein für die Detektion des Ultraschallwellenpulses relevantes Zeitfenster bestimmt. Auf diese Weise kann ein zeitlicher Toleranzbereich für die Detektion des Ultraschallwellenpulses berücksichtigt werden. Das Synchronisierungssignal kann beispielsweise als Rechtecksignal ausgebildet sein. Empfängt der zweite Ultraschallsensorkopf den direkten Ultraschallwellenpuls innerhalb der Dauer des Synchronisierungssignals, beispielsweise des Rechtecksignals, gilt die zeitliche Relation zwischen dem Synchronisierungssignal und der Detektion des Ultraschallwellenpulses als erfüllt und ein die Manipulationsfreiheit anzeigendes Steuersignal wird erzeugt. Ultraschallwellensignale hingegen, welche außerhalb der Dauer des Synchronisierungssignals von dem zweiten Ultraschallsensorkopf gemessen werden, können als Ultraschallwellenechos und damit als Indiz für Hindernisse im Erfassungsbereich gewertet werden.

In einer weiteren bevorzugten Ausführungsform des Verfahrens wird der zweite Ultraschallsensorkopf gemäß einem der zu Beginn beschriebenen Verfahren betrieben, bei dem jedes von dem zweiten Ultraschallsensorkopf gemessene Empfangssignal mit einem von mindestens zwei unterschiedlichen Verstärkungsgraden verstärkt wird, bei dem die mit dem niedrigeren Verstärkungsgrad verstärkten Empfangssignale nach dem Prinzip der Echolaufzeitmessung analysiert werden und ein an das Ergebnis der Analyse angepasstes Steuersignal erzeugt wird und bei dem die mit dem höheren Verstärkungsgrad verstärkten Empfangssignale mit einem Referenzempfangssignal abgeglichen werden und ein an das Ergebnis des Abgleichs angepasstes zweites Steuersignal erzeugt wird. Bei dem Empfangssignal kann es sich um ein von dem ersten oder um ein von dem zweiten Ultraschallsensorkopf ausgesandtes Ultraschallwellensignal handeln. Die Funktionsprüfung kann auf diese Weise sowohl mit dem Ultraschallwellensignal des ersten als auch mit dem des zweiten Ultraschallsensorkopfes durchgeführt werden, so dass die Zuverlässigkeit der Funktionsprüfung verbessert wird. Hinsichtlich weiterer Ausführungsformen dieses Verfahrens wird zusätzlich auf die Beschreibung des zu Beginn beschriebenen Verfahrens verwiesen.

Insbesondere weist der vom zweiten Ultraschallsensorkopf empfangene Ultraschallwellenpuls ein zumindest von Teilen der Vorrichtung im Erfassungsbereich erzeugtes Ultraschallwellenecho auf. Auf diese Weise lässt sich eine Manipulation innerhalb des Todraums des Näherungssensors vermeiden.

Bevorzugt weist der vom zweiten Ultraschallsensorkopf empfangene Ultraschallwellenpuls ein von einem in dem Erfassungsbereich angeordneten Referenzelement erzeugtes Ultraschallwellenecho auf. Auf diese Weise kann dem Referenzempfangssignal eine verbesserte Unterscheidbarkeit verliehen werden.

Eine zuverlässigere Funktionsprüfung wird dadurch erreicht, dass die von dem ersten und von dem zweiten Ultraschallsensorkopf ausgesendeten Signale ein unterschiedliches Frequenzspektrum und/oder eine unterschiedliche Kodierung aufweisen. Das von einem der Ultraschallsensorköpfe empfangene Ultraschallwellensignal kann so dem Ultraschallsensorkopf zugeordnet werden, von dem es ausgesendet wurde. Insbesondere kann auf diese Weise die Analyse des Ultraschallwellensignals abhängig von seiner Zuordnung durchgeführt werden.

Weiterhin ist bevorzugt, dass der Verstärkungsgrad von der Zuordnung des Ultraschallwellensignals abhängig ist. Nach der Zuordnung eines empfangenen Ultraschallsignals kann das Ultraschallwellensignal entsprechend verstärkt werden. Der höhere Verstärkungsgrad kann insbesondere verwendet werden, wenn das Ultraschallwellensignal dem empfangenden Ultraschallsensorkopf zugeordnet ist, da es sich bei diesem Signal um ein Echo handelt. Im Gegensatz dazu kann das von einem anderen als dem empfangenen Ultraschallsensorkopf gesendete Ultraschallwellensignal mit dem geringeren und/oder dem höheren Verstärkungsgrad verstärkt werden, da es sich bei diesem Signal um ein direktes Signal oder um ein Echo handeln kann.

Das Verfahren ist nicht auf die zuvor beschriebenen Ausführungsformen der dritten Lehre der vorliegenden Erfindung beschränkt. Vielmehr können auch Merkmale der beschriebenen Ausführungsformen gemäß der ersten und zweiten Lehre der Erfindung bei dem Verfahren der dritten Lehre eingesetzt werden.

Hinsichtlich weiterer Merkmale bzw. Vorteile des Verfahrens wird auf die weiter oben gemachten Ausführungen verwiesen.

Weitere Merkmale und Vorteile der vorliegenden Erfindung werden im Folgenden an Hand von Ausführungsbeispielen näher erläutert, wobei auf die beigefügte Zeichnung Bezug genommen wird. In der Zeichnung zeigen:
- Fig. 1: ein schematisches Ausführungsbeispiel des erfindungsgemäßen Näherungssensors mit Ultraschallsensorkopf und Referenzelement,
- Fig. 2: als Anwendungsbeispiel ein Müllsammelfahrzeug als Vorrichtung, an der mehrere Näherungssensoren zur Sicherung des Umgebungsbereichs angeordnet sind und
- Fig. 3a-c: ein schematisches Ausführungsbeispiel eines Näherungssensors mit zwei Ultraschallsensorköpfen.

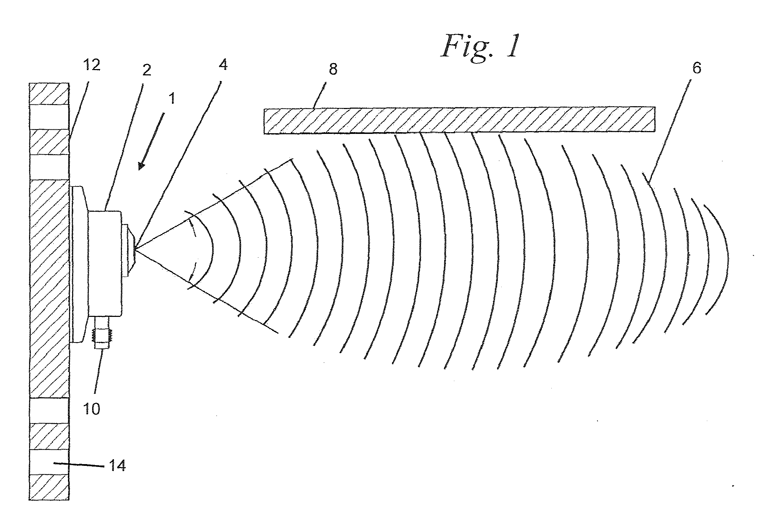

Fig. 1 zeigt einen Näherungssensor 1 mit einem Ultraschallsensorkopf 2 und einem an diesem Ultraschallsensorkopf 2 angeordneten Schallwandler 4. Der Schallwandler 4 sendet pulsartig Ultraschallwellen, in diesem Ausführungsbeispiel innerhalb eines definierten Winkels, insbesondere von etwa 60°, in den Erfassungsbereich 6 aus. Andere Einstellungen des Winkels sind natürlich möglich.

An Hindernissen (hier nicht dargestellt) im Erfassungsbereich 6 werden die Ultraschallwellen zumindest zum Teil reflektiert und von dem Schallwandler empfangen. Durch Analyse der Empfangssignale nach dem Prinzip der Echolaufzeitmessung mittels einer in dem Ultraschallsensorkopf 2 angeordneten Verarbeitungseinheit, die einen Verstärker, Mittel zur Analyse von Empfangssignalen und Mittel zum Erzeugen von Steuersignalen und Ausgangssignalen (alle nicht dargestellt) aufweist, können die Hindernisse im Erfassungsbereich 6 erkannt werden. Die Mittel zur Analyse von Empfangssignalen und die Mittel zum Erzeugen von Steuersignalen und Ausgangssignalen werden vorzugsweise als elektronische Schaltung realisiert.

Der Näherungssensor 1 umfasst weiterhin ein Referenzelement 8 (schraffiert), das in Fig. 1 schematisch dargestellt ist. Das Referenzelement 8 ist zumindest teilweise in dem Erfassungsbereich 6 angeordnet. Somit erzeugt das Referenzelement 8 schwache Ultraschallwellenechos, die in den von dem Ultraschallsensorkopf erzeugten Empfangssignalen nur dann wahrnehmbar bzw. nachweisbar sind, wenn die Empfangssignale von dem Verstärker mit einem hinreichenden Verstärkungsgrad verstärkt worden sind. Die von dem Referenzelement 8 erzeugten Ultraschallwellenechos können somit als Nachweis von Manipulationen des Näherungssensors 1 verwendet werden. Ein Referenzelement 8 als Teil des Näherungssensors ist immer dann erforderlich, wenn keine Bauteile der Vorrichtung geeignet sind, die für die Referenzempfangssignale tauglichen Ultraschallwellenechos zu erzeugen. Der eine Verstärkungsgrad, der angewendet werden muss, um die schwachen, von dem Referenzelement 8 erzeugten Ultraschallwellenechos zu erkennen, und der andere Verstärkungsgrad, der angewendet werden muss, um die Ultraschallwellenechos des Referenzelements 8 unterhalb der Nachweisgrenze zu halten, werden vor der Inbetriebnahme des Näherungssensors 1 ermittelt.

Ferner ist am Ultraschallsensorkopf 2 ein Verbindungsstück 10, beispielsweise ein Signalausgang, angeordnet. Über das Verbindungsstück 10 kann das von dem Ultraschallsensorkopf 2 erzeugte Ausgangssignal über eine Verbindung (nicht dargestellt) an die Steuerungseinheit der Vorrichtung, an der der Näherungssensor montiert ist, übermittelt werden. Durch die Steuerungseinheit können somit Maßnahmen veranlasst werden, die etwaige Hindernisse im Erfassungsbereich 6 vor Schaden bewahren. Das Ausgangssignal kann ein konstantes, alternativ aber auch ein gepulstes Spannungssignal sein. Die Pulsrate liegt im letzteren Fall vorzugsweise in der Größenordnung von 100 Hz. Die Spannungsamplitude kann beispielsweise bei einigen Volt liegen.

Weiterhin ist eine Montageplatte 12 zur Befestigung des Ultraschallsensorkopfes 2 vorgesehen. Dazu weist die Montageplatte 12 verschiedene Bohrungen 14 auf, um einerseits mit einem Untergrund, beispielsweise einer Fahrzeugwand, und andererseits mit dem Ultraschallsensorkopf 2 mittels Schrauben oder anderer zweckmäßiger Befestigungsmittel verbunden zu werden.

Durch das in Fig. 1 gezeigte Ausführungsbeispiel des erfindungsgemäßen Näherungssensors 1 wird deutlich, dass keine Maßnahmen mehr erforderlich sind, um den Todraum (nicht dargestellt) des Näherungssensors 1 gegen Manipulationen abzuschirmen. Wird die Aussendung der Ultraschallwellen nämlich im Zuge einer Manipulation blockiert, führt der Abgleich von den mit dem höheren Verstärkungsgrad verstärkten Empfangssignalen mit dem Referenzempfangssignal zu einem negativen Ergebnis. Somit kann zumindest für eine Überprüfung der Funktionstüchtigkeit des Näherungssensors 1 Anlass gegeben werden. Der Abgleich würde ebenfalls ein negatives Ergebnis liefern, wenn die körperliche Ausgestaltung des Referenzelements 8 so manipuliert wird, dass sich die von dem Referenzelement 8 erzeugten Ultraschallwellenechos ändern.

Der Näherungssensor 1 kann außerdem offen an der vorgesehenen Vorrichtung montiert werden. Diese offene Montierung hat insbesondere den Vorteil, dass sich beispielsweise kein Regenwasser in einer Vorrichtung zur Abschirmung des Näherungssensors 1 sammeln und die Funktion des Näherungssensors beeinträchtigen kann.

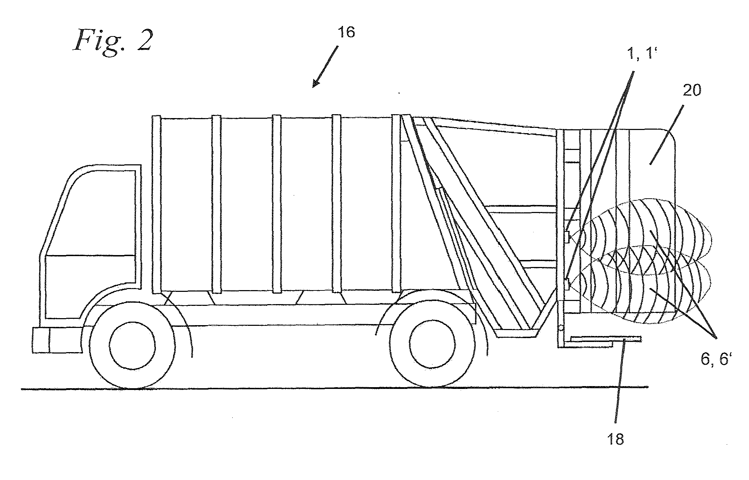

Fig. 2 zeigt schematisch ein Müllsammelfahrzeug 16 als Vorrichtung, an der zur Sicherung des Umgebungsbereiches mehrere Näherungssensoren 1, 1' angebracht wurden. Dargestellt ist eine Sicherung des Rückraumbereiches auf der in Vorwärtsrichtung liegenden linken Seite des Fahrzeugs 16. Es ist zweckmäßig, wenn die in Vorwärtsrichtung liegende, nicht gezeigte, rechte Seite des Fahrzeugs 16 ebenfalls eine ähnliche Anordnung von Näherungssensoren 1, 1' aufweist. Die Erfindung ist darüber hinaus nicht auf den Rückraumbereich beschränkt, denn ebenso können die Seitenbereiche des Fahrzeugs 16 zusätzlich oder alternativ von Näherungssensoren 1, 1' überwacht werden. Jeder der Näherungssensoren 1, 1' erfasst zumindest teilweise den Umgebungsbereich des Fahrzeuges 16, insbesondere oberhalb von und hinter Trittbrettern 18, auf denen Personen während der Fahrt stehen können.

Die Näherungssensoren 1, 1' sind so ausgebildet, dass der hintere Teil 20 des Müllsammelfahrzeugs 16 zumindest teilweise innerhalb der Erfassungsbereiche 6, 6' der Näherungssensoren 1, 1' angeordnet ist. Die von dem hinteren Teil 20 erzeugten schwachen Ultraschallwellenechos sind demnach in diesem Ausführungsbeispiel dazu geeignet, für Referenzempfangssignale herangezogen zu werden. Das erfindungsgemäße Verfahren kann somit besonders vorteilhaft angewendet werden. In diesem Fall wären demnach keine gesonderten, in den Erfassungsbereichen 6, 6' zumindest teilweise angeordneten Referenzelemente notwendig, durch deren Ultraschallwellenechos die Unterscheidbarkeit der Referenzempfangssignale hergestellt werden müsste. Es ist natürlich trotzdem möglich, durch Hinzufügen von Referenzelementen weitere Ultraschallwellenechos für die Referenzempfangssignale zu erzeugen, um die Referenzempfangssignale noch charakteristischer zu machen.

Weiterhin ist eine Steuerungseinheit an dem Fahrzeug 16 vorgesehen, die in Fig. 2 nicht dargestellt ist. Über eine elektrische Verbindung ist die Steuerungseinheit mit den Näherungssensoren 1, 1' verbunden. Somit können die Ausgangssignale der Näherungssensoren 1, 1' weitergeleitet werden. Mit Hilfe von mindestens einem Schaltmittel kann dann eine Betriebsfunktion des Fahrzeuges 16 beeinflusst werden, indem das Schaltmittel bei Vorliegen eines entsprechenden Ausgangssignals der Näherungssensoren 1, 1' zur Beeinflussung schaltet. Als Schaltmittel kommen herkömmliche Relais oder Transistoren in Frage. Die Steuerungseinheit ist bevorzugt in der Fahrerkabine angeordnet.

Die Steuerungseinheit kann darüber hinaus ein zweites Schaltmittel aufweisen, das bei eingelegtem Rückwärtsgang oder bei von Radsensoren bzw. Drehsensoren festgestellter Rückwärtsbewegung schaltet. Somit lassen sich zwei verschiedene Ereignisse, das Erfassen eines Hindernisses und eine mögliche Rückwärtsbewegung, miteinander kombinieren. Die Steuerungseinheit kann dann einen Motorstopp aktivieren und/oder mindestens eine Bremse des Fahrzeuges aktivieren und/oder das Getriebe des Fahrzeuges in die Leerlaufstellung schalten. Insbesondere bei selbstfahrenden Arbeitsmaschinen wird dadurch eine besondere Sicherheit erreicht.

Ganz allgemein können die Näherungssensoren 1, 1' Mittel zum Verändern der Aussendegeometrien der Ultraschallwellen und damit der Erfassungsbereiche 6, 6' aufweisen. Dadurch lassen sich die Aussendegeometrien an die jeweiligen Gegebenheiten anpassen. Insbesondere bei der Anordnung von mehreren Näherungssensoren 1, 1', wie in Fig. 2 beispielhaft dargestellt, können die Aussendegeometrien bzw. Erfassungsbereiche 6, 6' einander angepasst werden. In dem gezeigten Beispiel überlappen sich die Erfassungsbereiche 6, 6' der beiden gezeigten Näherungssensoren 1, 1' teilweise, um von Ultraschallwellen nicht überwachte Bereiche des Rückraums zu vermeiden.

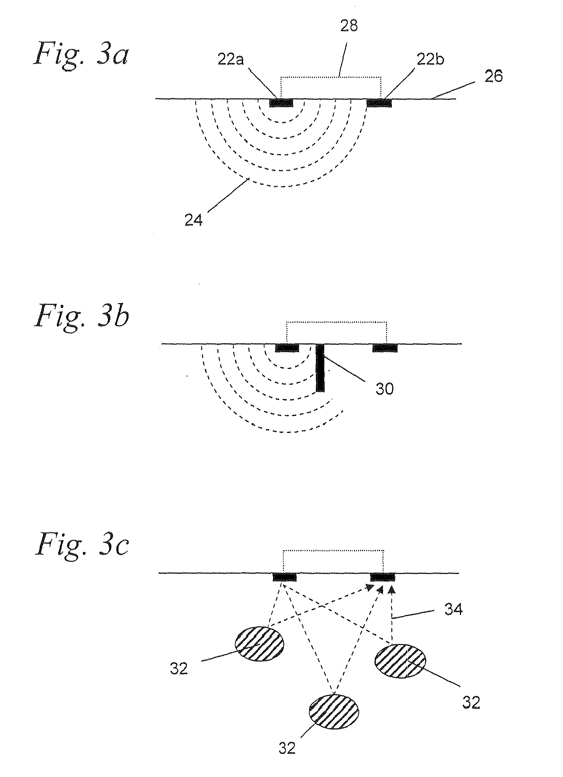

Die Fig. 3a bis 3c zeigen einen zwei Ultraschallsensorköpfe 22a, 22b aufweisenden Näherungssensor. In diesem Beispiel fungiert einer der Ultraschallsensorköpfe 22a als Sender, der andere 22b hingegen lediglich als Empfänger von Synchronisierungssignalen und Ultraschallwellenpulsen 24. Es ist aber auch möglich, beide Ultraschallsensorköpfe 22a, 22b gleichzeitig als Sender und Empfänger einzusetzen. Die Aussendegeometrie des ersten Ultraschallsensorkopfs 22a ist in diesem Beispiel so eingerichtet, dass der zweite Ultraschallsensorkopf 22b in seinem Erfassungsbereich liegt.

Die Ultraschallsensorköpfe 22a, 22b sind voneinander beabstandet an einer zu überwachenden Vorrichtung 26, beispielsweise am Heck eines Kraftfahrzeugs (nicht abgebildet) angeordnet. Die beiden Ultraschallsensorköpfe 22a, 22b sind über eine Synchronisierungsleitung 28 miteinander verbunden, über welche Synchronisierungssignale von dem ersten Ultraschallsensorkopf 22a an den zweiten Ultraschallsensorkopf 22b übermittelt werden. Alternativ sind aber auch draht- bzw. kabellose Übertragungsarten möglich. Grundsätzlich ist auch denkbar, einen externen Synchronisierungssignalgeber vorzusehen.

In fester zeitlicher Beziehung zu dem Synchronisierungssignal wird von dem ersten Ultraschallsensorkopf 22a ein Ultraschallwellenpuls 24 ausgesendet, welcher sich in den Erfassungsbereich fortpflanzt. Als Erfassungsbereich ist in diesem Beispiel im Wesentlichen der gesamte der Vorrichtung 26 vorgelagerte Halbraum anzusehen. Die Aussendefrequenz kann beispielsweise in der Größenordnung von 40 Ultraschallwellenpulsen pro Sekunde liegen. Nach einer bestimmten Zeit trifft der Ultraschallwellenpuls 24 auf direktem Wege auf den zweiten Ultraschallsensorkopf 22b, wie in Fig. 3a gezeigt. Dort wird geprüft, ob die Detektion des Ultraschallwellenpulses 24 die zeitliche Relation zum Synchronisierungssignal erfüllt. Ist dies der Fall, wird ein Steuersignal erzeugt, welches das Fehlen einer Manipulation des Näherungssensors anzeigt. Gegebenenfalls weitere vom zweiten Ultraschallsensorkopf 22b gemessene Ultraschallwellensignale können demnach als an Hindernissen 32 gebildete Ultraschallwellenechos 34 interpretiert werden und zur Erzeugung entsprechender weiterer Steuersignale führen.

Werden die Übermittlung des Synchronisierungssignals und die Aussendung des Ultraschallwellenpulses 24 beispielsweise im Wesentlichen gleichzeitig vorgenommen, besteht die zeitliche Beziehung zwischen dem Synchronisierungssignal und der Detektion des Ultraschallwellenpulses 24 gerade in der kürzesten Laufzeit des Ultraschallwellenpulses 24 von dem ersten Ultraschallsensorkopf 22a zu dem zweiten Ultraschallsensorkopf 22b. Weisen die beiden Ultraschallsensorköpfe 22a, 22b, um ein Beispiel zu nennen, einen Abstand von etwa 0,25 m auf, beträgt bei einer Schallgeschwindigkeit in Luft von ca. 340 m/s die Laufzeit etwa 0,7 ms. Aus dem Ultraschallwellenpuls 24 durch Reflexion an Hindernissen 32 hervorgehende Ultraschallwellenechos 34 werden in diesem Beispiel hingegen erst nach 0,7 ms auf den zweiten Ultraschallsensorkopf 22b treffen, weil sie einen indirekten Weg und damit eine längere Laufstrecke zurückzulegen haben.

Es ist möglich, dass Synchronisierungssignal als Rechtecksignal auszubilden, welches eine Dauer in der Größenordnung von Millisekunden, beispielsweise 1 ms hat. Dadurch kann eine zeitliche Toleranz für die Detektion des Ultraschallwellenpulses 24 bestimmt werden, indem ein innerhalb des Intervalls von 1 ms an dem zweiten Ultraschallsensorkopf 22b eintreffender Ultraschallwellenpuls 24 als in korrekter zeitlicher Relation zu dem Synchronisierungssignal gewertet wird. Bei einem Zeitfenster von 1 ms und einer Schallgeschwindigkeit von 340 m/s bedeutet dies im Umkehrschluss, dass der Abstand der beiden Ultraschallsensorköpfe 22a, 22b in diesem Beispiel nicht größer als ca. 0,34 m sein darf.

Fig. 3b zeigt nun die aus Fig. 3a bekannte Anordnung, wobei jedoch eine Sperre 30 zwischen dem ersten Ultraschallsensorkopf 22a und dem zweiten Ultraschallsensorkopf 22b platziert wurde. Durch die Sperre 30 ist der direkte Weg des Ultraschallwellenpulses 24 vom ersten Ultraschallsensorkopf 22a zum zweiten Ultraschallsensorkopf 22b blockiert. Der zweite Ultraschallsensorkopf 22b kann demnach keinen Ultraschallwellenpuls 24 mit der korrekten zeitlichen Relation zum Synchronisierungssignal detektieren. Daraus wird gefolgert, dass eine Manipulation vorliegt, und ein entsprechendes Steuersignal wird erzeugt. Dieses Steuersignal kann wiederum in ein die Manipulation repräsentierendes Ausgangssignal eingehen, welches zu einem Eingriff in den Betrieb der Vorrichtung 26, beispielsweise zu einem Motorstopp des Kraftfahrzeugs führt.

Fig. 3c zeigt den unmanipulierten Näherungssensor, wenn sich Hindernisse 32 in dem Erfassungsbereich befinden. Die zeitliche Relation zwischen der Detektion des Ultraschallwellenpulses 24 und des Synchronisierungssignals wird in diesem Beispiel nicht beeinträchtigt, so dass der Näherungssensor lediglich auf an den Hindernissen 32 gebildeten Ultraschallwellenechos 34 anspricht, welche aus dem von dem ersten Ultraschallsensorkopf 22a ausgesendeten Ultraschallwellenpuls 24 hervorgegangen sind. Aus dem Vorliegen von Ultraschallwellenechos 34 wird gefolgert, dass Hindernisse 32 präsent sind, und ein entsprechendes Steuersignal wird erzeugt. Dieses Steuersignal kann wiederum in ein Hindernisse 32 repräsentierendes Ausgangssignal eingehen, welches zu einem Eingriff in den Betrieb der Vorrichtung 26, beispielsweise zu einem Motorstopp des Kraftfahrzeugs führt.

## Patentansprüche

1. Verfahren zur Funktionsprüfung von Näherungssensoren im laufenden Betrieb,
- bei dem Ultraschallwellen von einem an einem Ultraschallsensorkopf angeordneten Schallwandler in einen Erfassungsbereich ausgesendet werden,
- bei dem aus dem Erfassungsbereich auf den Schallwandler einfallende Ultraschallwellen empfangen werden,
- bei dem durch den Ultraschallsensorkopf Empfangssignale erzeugt werden,
- bei dem jedes Empfangssignal mit einem von mindestens zwei unterschiedlichen Verstärkungsgraden verstärkt wird,
- bei dem die mit dem niedrigeren Verstärkungsgrad verstärkten Empfangssignale nach dem Prinzip der Echolaufzeitmessung analysiert werden und bei dem ein an das Ergebnis der Analyse angepasstes erstes Steuersignal erzeugt wird,
- bei dem die mit dem höheren Verstärkungsgrad verstärkten Empfangssignale nach dem Prinzip der Echolaufzeitmessung analysiert und zusätzlich mit einem Referenzempfangssignal abgeglichen werden und bei dem ein an das Ergebnis des Abgleichs angepasstes zweites Steuersignal erzeugt wird, und
- bei dem ein Ausgangssignal erzeugt wird, das je nach verwendetem Verstärkungsgrad an das erste Steuersignal oder an das zweite Steuersignal angepasst ist.

2. Verfahren nach Anspruch 1,
bei dem das Referenzempfangssignal ein zumindest von Teilen der Vorrichtung im Erfassungsbereich erzeugtes Ultraschallwellenecho aufweist.

3. Verfahren nach Anspruch 1 oder 2,
bei dem das Referenzempfangssignal zusätzlich oder alternativ ein von einem in dem Erfassungsbereich angeordneten Referenzelement erzeugtes Ultraschallwellenecho aufweist.

4. Verfahren nach einem der Ansprüche 1 bis 3,
bei dem der Betrieb der Vorrichtung von dem Ausgangssignal beeinflusst wird.

5. Verfahren nach einem der Ansprüche 1 bis 4,
bei dem der Erfassungsbereich, in den die Ultraschallwellen ausgesendet werden, einen definierten Winkel, insbesondere von 60° umfasst.

6. Verfahren nach einem der Ansprüche 1 bis 5,
bei dem jedes n-te Empfangssignal mit dem höheren Verstärkungsgrad verstärkt wird, wobei n einen beliebigen Wert der ganzen Zahlen größer oder gleich zwei annehmen kann.

7. Verfahren nach einem der Ansprüche 1 bis 6,
bei dem durch die Steuersignale und/oder durch das Ausgangssignal ein Alarm auslösbar ist.

8. Verfahren nach einem der Ansprüche 1 bis 7,
bei dem ein gepulstes Ausgangssignal erzeugt wird.

9. Näherungssensor (1, 1') zur Überwachung des Umgebungsbereichs einer Vorrichtung und zur Ausführung eines Verfahrens gemäß einem der Ansprüche 3 bis 8,
- mit einem Ultraschallsensorkopf (2),
- mit einem an dem Ultraschallsensorkopf (2) angeordneten Schallwandler (4) und
- mit einer in dem Ultraschallsensorkopf (2) angeordneten Verarbeitungseinheit,
- wobei die Verarbeitungseinheit einen Verstärker, Mittel zur Analyse von Empfangssignalen und Mittel zum Erzeugen von Steuersignalen und Ausgangssignalen aufweist,
- wobei Ultraschallwellen von dem Schallwandler in einen Erfassungsbereich (6) aussendbar sind,
- wobei aus dem Erfassungsbereich (6) einfallende Ultraschallwellen von dem Schallwandler (4) empfangbar sind, und
- wobei durch den Verstärker mindestens zwei unterschiedliche Verstärkungsgrade einstellbar sind,
**dadurch gekennzeichnet,**
- **dass** ein Referenzelement (8) zumindest teilweise in dem Erfassungsbereich (6) angeordnet ist, und
- wobei das Referenzelement (8) so ausgebildet ist, dass die von dem Referenzelement (8) reflektierten Ultraschallwellen nur bei dem höheren Verstärkungsgrad von den Mitteln zur Analyse der Empfangssignale wahrnehmbar sind.

10. Näherungssensor nach Anspruch 9,
**dadurch gekennzeichnet,**
**dass** eine Verbindung (10) zu einer Steuerungseinheit der Vorrichtung vorgesehen ist.

11. Näherungssensor nach Anspruch 9 oder 10,
**dadurch gekennzeichnet,**
**dass** eine Montageplatte (12) zur Befestigung des Ultraschallsensorkopfes (2) vorgesehen ist.

12. Näherungssensor nach einem der Ansprüche 9 bis 11,
**dadurch gekennzeichnet,**
**dass** Mittel zum Auslösen eines Alarms vorgesehen sind.

13. Verfahren zur Funktionsprüfung von Näherungssensoren im laufenden Betrieb,
- bei dem zwei voneinander beabstandete Ultraschallsensorköpfen mittels eines Synchronisierungssignals synchronisiert werden,
- bei dem von dem ersten Ultraschallsensorkopf in fester zeitlicher Beziehung zu dem Synchronisierungssignal ein Ultraschallwellenpuls ausgesendet wird und
- bei dem von dem zweiten Ultraschallsensorkopf in Abhängigkeit von der zeitlichen Relation der Detektion des Ultraschallwellenpulses zum Synchronisierungssignal ein Steuersignal erzeugt wird.

14. Verfahren nach Anspruch 13,
bei dem der erste Ultraschallsensorkopf lediglich als Sender der Ultraschallwellenpulse und der zweite Ultraschallsensorkopf lediglich als Empfänger der Ultraschallwellenpulse fungiert.

15. Verfahren nach Anspruch 13,
bei dem der eine Ultraschallsensorkopf als Sender und Empfänger für den jeweils anderen Ultraschallsensorkopf fungiert.

16. Verfahren nach einem der Ansprüche 13 bis 15,
bei dem durch die Dauer des Synchronisierungssignals ein für die Detektion des Ultraschallwellenpulses relevantes Zeitfenster bestimmt wird.
